# EUROPEAN PATENT APPLICATION

(11) **EP 4 513 867 A1**
(43) Date of publication of application: **26.02.2025**
(21) Application number: 24164050.7
(22) Date of filing: 18.03.2024
(51) Int. Cl.: H04N 9/31, G02B 27/00

(54) **OPTICAL ACTUATOR AND IMAGING DEVICE**

(30) Priority: 22.08.2023 CN 202311060967
(71) Applicant: Delta Electronics, Inc., Taoyuan City 333 (TW)
(72) Inventor: CHEN, Ching-Chao, 333 Taoyuan City (TW); PAN, Cheng-Yung, 333 Taoyuan City (TW)
(74) Representative: Porta & Consulenti Associati S.p.A.

(57) **Abstract**

An optical actuator includes a base, a light-transmitting plate, a frame, a plurality of suspension members, and a plurality of actuation members. The base has a mounting surface. The light-transmitting plate is located above the mounting surface. The frame frames an outer edge of the light-transmitting plate. The frame retreats inwardly relative to the mounting surface, so that the mounting surface has a plurality of disposing areas relative to the frame. The suspension members are respectively located on the disposing areas and connected between the base and the frame. The actuation members are respectively located on the disposing area and configured to drive the frame to reciprocate relative to the mounting surface.

## Description

### BACKGROUND

### Technical Field

The present disclosure relates to an optical actuator and an imaging device.

### Description of Related Art

A projector is a display device used to produce large-size images. The imaging principle of the projector is to use the light valve module to convert the illumination beam generated by the light source module into an image beam, and then project the image beam onto the screen or wall through the projection lens.

In order to improve the pixel quality of the projected images, some projectors have an optical actuator installed between the light valve module and the projection lens, and the vibration of the optical actuator causes the pixels to reciprocate appropriately to prevent the pixel particles in the projected images from being too obvious. Specifically, when the light generated by the light source module is modulated by the light valve module, the light is then transmitted to the projection lens through the optical actuator.

However, existing optical actuators are large in size, so when used with projection lenses with partial focal lengths (for example, projection lenses with short back focus distances), the spaces between the prisms and the projection lenses are often limited and thus the problem of structural interference is encountered, which makes the optical actuators cannot be used.

Accordingly, how to provide optical actuator and an imaging device that can solve the aforementioned problems becomes an important issue to be solved by those in the industry.

### SUMMARY

An aspect of the disclosure is to provide an optical actuator and an imaging device.

According to an embodiment of the disclosure, an optical actuator includes a base, a light-transmitting plate, a frame, a plurality of suspension members, and a plurality of actuation members. The base has a mounting surface. The light-transmitting plate is located above the mounting surface. The frame frames an outer edge of the light-transmitting plate. The frame retreats inwardly relative to the mounting surface, so that the mounting surface has a plurality of disposing areas relative to the frame. The suspension members are respectively located on the disposing areas and connected between the base and the frame. The actuation members are respectively located on the disposing areas and configured to drive the frame to reciprocate relative to the mounting surface.

In one or more embodiments of the present disclosure, one of the suspension members and one of the actuation members on one of the disposing areas are arranged in a normal direction of the mounting surface.

In one or more embodiments of the present disclosure, the actuation members are configured to drive the frame to reciprocate relative to the mounting surface along the normal direction.

In one or more embodiments of the present disclosure, the disposing areas are respectively located at four corners of the base.

In one or more embodiments of the present disclosure, two of the actuation members are arranged along a first diagonal axis. Other two of the actuation members are arranged along a second diagonal axis. The first diagonal axis and the second diagonal axis are perpendicular to each other.

According to an embodiment of the disclosure, an imaging device includes a light valve module, an optical actuator, and a plurality of prisms. The optical actuator includes a base, a light-transmitting plate, a frame, a plurality of suspension members, and a plurality of actuation members. The base has a mounting surface. The light-transmitting plate is located above the mounting surface. The frame frames an outer edge of the light-transmitting plate. The frame retreats inwardly relative to the mounting surface, so that the mounting surface has a plurality of disposing areas relative to the frame. The suspension members are respectively located on the disposing areas and connected between the base and the frame. The actuation members are respectively located on the disposing area and configured to drive the frame to reciprocate relative to the mounting surface. The prisms are optically coupled between the light valve module and the light-transmitting plate.

In one or more embodiments of the present disclosure, one of the suspension members and one of the actuation members on one of the disposing areas are arranged in a normal direction of the mounting surface.

In one or more embodiments of the present disclosure, the actuation members are configured to drive the frame to reciprocate relative to the mounting surface along the normal direction.

In one or more embodiments of the present disclosure, the disposing areas are respectively located at four corners of the base.

In one or more embodiments of the present disclosure, two of the actuation members are arranged along a first diagonal axis. Other two of the actuation members are arranged along a second diagonal axis. The first diagonal axis and the second diagonal axis are perpendicular to each other.

In one or more embodiments of the present disclosure, the first diagonal axis extends through two of the disposing areas. The second diagonal axis extends through other two of the disposing areas.

In one or more embodiments of the present disclosure, the light valve module has a length axis and a width axis respectively parallel to the first diagonal axis and the second diagonal axis.

In one or more embodiments of the present disclosure, the base further has a side surface connected to the mounting surface. The side surface is connected to two of the disposing areas. The prisms include a first prism and a second prism. The first prism is located between the light valve module and the light-transmitting plate. The second prism is partially located between the light valve module and the first prism and extends to a side of the side surface to form a gap with the side surface.

In one or more embodiments of the present disclosure, one of the suspension members has a first fixing end and a second fixing end, and is fixed to the base and the frame respectively through the first fixing end and the second fixing end.

In one or more embodiments of the present disclosure, the one of the suspension members includes two ribs. Two ends of each of the ribs are respectively connected to the first fixing end and the second fixing end. The ribs protrude away from each other in opposite directions between the first fixing end and the second fixing end.

Accordingly, in the optical actuator and the imaging device of the present disclosure, by concentrating the suspension members and the actuation members on a plurality of disposing areas of the mounting surface of the base, the area of the mounting surface can be reduced, thereby effectively reducing the volume occupied by the optical actuator in the imaging device. In this way, the applicability of projection lenses with various focal lengths in the imaging device of the present disclosure can be effectively increased.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a schematic perspective view of an imaging device according to an embodiment of the present disclosure;
Fig. 2 is a schematic perspective view of some components of the imaging device according to an embodiment of the present disclosure;
Fig. 3 is a side view of the components in Fig. 2;
Fig. 4 is a front view of an optical actuator in Fig. 3;
Fig. 5 is another front view of the optical actuator in Fig. 4, in which a suspension bracket is removed;
Fig. 6 is a front view of the suspension bracket in Fig. 4; and
Fig. 7 is a perspective view of an actuation member in Fig. 2.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts. However, specific structural and functional details disclosed herein are merely representative for purposes of describing example embodiments, and thus may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the disclosure.

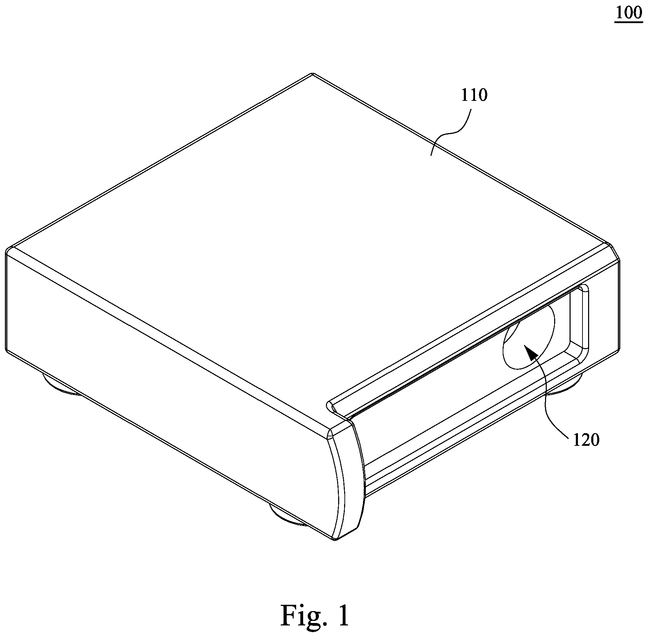

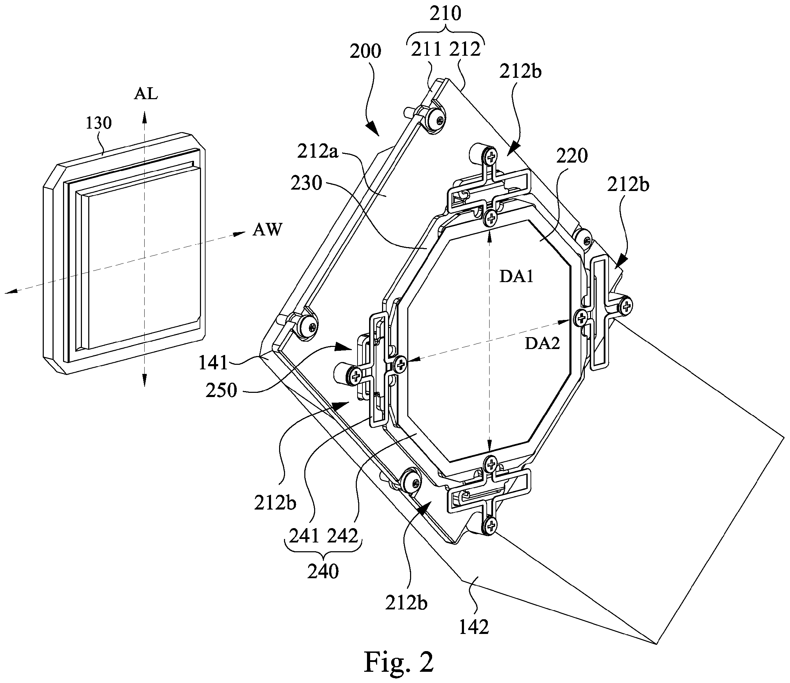

Reference is made to Figs. 1 and 2. Fig. 1 is a schematic perspective view of an imaging device 100 according to an embodiment of the present disclosure. Fig. 2 is a schematic perspective view of some components of the imaging device 100 according to an embodiment of the present disclosure. As shown in Figs. 1 and 2, in the present embodiment, the imaging device 100 takes a projector as an example, but the present disclosure is not limited thereto. The imaging device 100 includes a housing 110 and a plurality of components disposed in the housing 110. For example, the imaging device 100 includes a projection lens 120, a light source module (not shown), a light valve module 130, an optical actuator 200, and a plurality of prisms. The light source module is configured to generate an illumination beam. The prisms are optically coupled between the light source module and the light valve module 130, and optically coupled between the light valve module 130 and the optical actuator 200. The illumination beam generated by the light source module first reaches the light valve module 130 through the prisms. The light valve module 130 is configured to convert the illumination beam into an image beam. The image beam is projected onto the screen sequentially through the prisms, the optical actuator 200, and the projection lens 120.

In some embodiments, the light valve module 130 is a digital micromirror device (DMD), but the present disclosure is not limited thereto. Specifically, when a certain pixel is to display an image, the corresponding micromirror element of the light valve module 130 causes the image beam converted from the illumination beam to be projected outside the housing 110 sequentially through the prisms, the optical actuator 200, and the projection lens 120. When a certain pixel is not expected to display an image, the corresponding micromirror element of the light valve module 130 causes the image beam to deviate from the optical actuator 200 after passing through the prisms, so that the image beam cannot be projected outside the housing 110 through the projection lens 120.

As shown in Fig. 2, in the present embodiment, the optical actuator 200 includes a base 210, a light-transmitting plate 220, a frame 230, a suspension bracket 240, and a plurality of actuation members 250. The base 210 has a mounting surface 212a. The light-transmitting plate 220 is located above the mounting surface 212a. The frame 230 frames an outer edge of the light-transmitting plate 220. The frame 230 retreats inwardly relative to the mounting surface 212a, so that the mounting surface 212a has a plurality of disposing areas 212b relative to the frame 230. The suspension bracket 240 includes a plurality of suspension members 241. The suspension members 241 are respectively located on the disposing areas 212b and connected between the base 210 and the frame 230. The actuation members 250 are respectively located on the disposing areas 212b and configured to drive the frame 230 to reciprocate relative to the mounting surface 212a. In detail, the function of the suspension bracket 240 is to suspend the frame 230 at a predetermined distance above the mounting surface 212a and maintain it parallel. The suspension bracket 240 also ensures that when the actuation members 250 drive the frame 230 to reciprocate, a certain moving space and the ability to elastically return are maintained. The prisms are optically coupled between the light valve module 130 and the light-transmitting plate 220.

It can be clearly seen from the foregoing structural configurations that the suspension members 241 and the actuation members 250 are respectively centrally disposed on the disposing areas 212b of the mounting surface 212a of the base 210. Therefore, the area of the mounting surface 212a can be reduced, thereby effectively reducing the volume occupied by the optical actuator 200 in the imaging device 100.

As shown in Fig. 2, in the present embodiment, the base 210 includes a bottom plate 211 and a circuit board 212. The circuit board 212 is disposed on the bottom plate 211 (e.g., by screws). The bottom plate 211 is located on a side of the base 210 facing the light valve module 130. The circuit board 212 is located on a side of the base 210 away from the light valve module 130. The mounting surface 212a is the surface of the circuit board 212 away from the bottom plate 211. In some embodiments, the material of the bottom plate 211 includes metal, thereby improving the overall rigidity of the base 210 and carrying the circuit board 212. The bottom plate 211 and the circuit board 212 have hollow structures for allowing the image beam converted by the light valve module 130 to pass through.

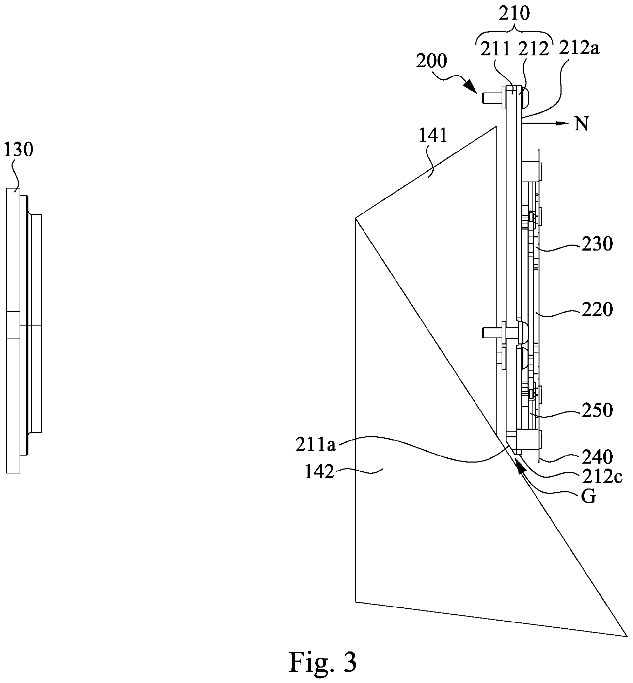

Reference is made to Fig. 3. Fig. 3 is a side view of the components in Fig. 2. As shown in Figs. 2 and 3, in the present embodiment, the base 210 further has a side surface 212c connected to the mounting surface 212a. The side surface 212c is connected to two of the disposing areas 212b (e.g., the two disposing areas 212b located on the right and lower sides in Fig. 2 and adjacent to the prisms). In other words, the side surface 212c is the surface of the circuit board 212 facing the prisms. The prisms include a first prism 141 and a second prism 142. The first prism 141 is located between the light valve module 130 and the light-transmitting plate 220. The second prism 142 is partially located between the light valve module 130 and the first prism 141 and extends to a side of the side surface 212c to form a gap G with the side surface 212c. Since the suspension members 241 and the actuation members 250 are centrally disposed on the disposing areas 212b of the mounting surface 212a, an edge of the frame 230 of the optical actuator 200 close to the second prism 142 can be closer to the side surface 212c of the base 210. In this way, the distance between the optical actuator 200 and the light valve module 130 can be effectively reduced without structural interference between the optical actuator 200 and the second prism 142, thereby effectively increasing the applicability of the projection lenses 120 with various focal lengths in the imaging device 100 of the present disclosure.

As shown in Fig. 3, in the present embodiment, the bottom plate 211 of the base 210 has a side surface 211a adjacent to the second prism 142, and the side surface 211a is inclined relative to the side surface 212c and is substantially parallel to the surface of the second prism 142 facing the optical actuator 200. In this way, the distance between the optical actuator 200 and the light valve module 130 can be further reduced.

As shown in Figs. 2 and 3, in the present embodiment, the suspension member 241 and the actuation member 250 located on the same disposing area 212b are arranged in a normal direction N of the mounting surface 212a, which causes the action direction of the actuation member 250 and the elastically returning direction of the corresponding suspension member 241 to move in the same normal direction N. It can be seen from this that each set of the suspension members 241 and actuation members 250 actually move in the same disposing areas 212b on the mounting surface 212a. Therefore, there are many positions around the frame 230 of the optical actuator 200 that can be vacated for making room.

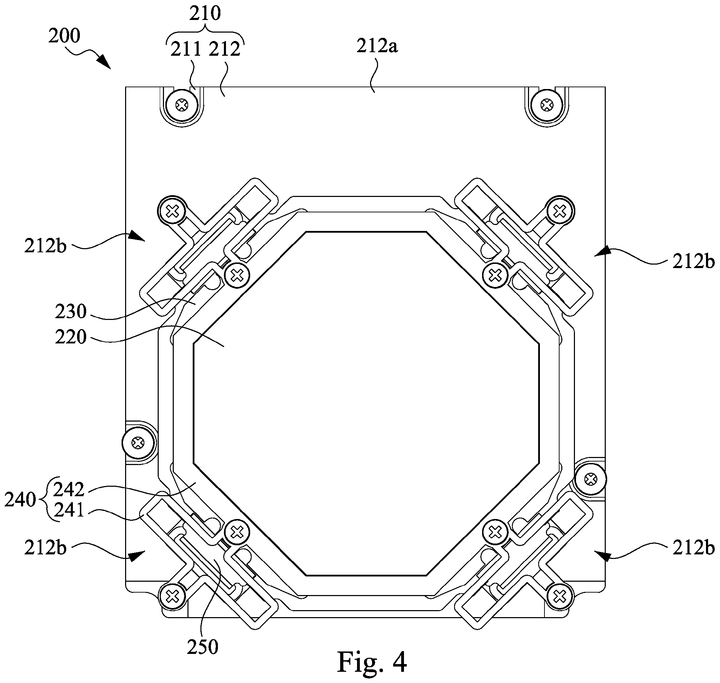

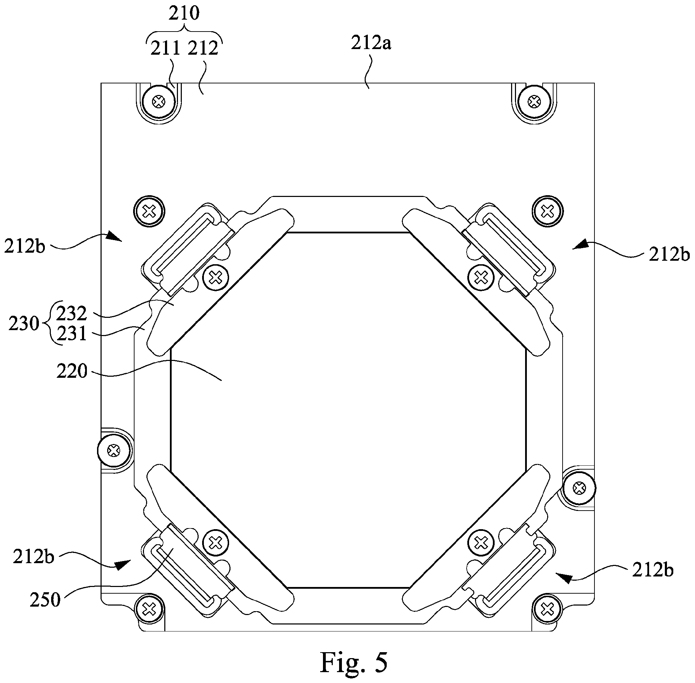

Reference is made to Figs. 4 and 5. Fig. 4 is a front view of the optical actuator 200 in Fig. 3. Fig. 5 is another front view of the optical actuator 200 in Fig. 4, in which the suspension bracket 240 is removed. As shown in Figs. 4 and 5, in the present embodiment, the disposing areas 212b are respectively located at four corners of the base 210. Specifically, the mounting surface 212a of the base 210 is substantially rectangular and has four corners. The four corners of the frame 230 are retracted relative to the mounting surface 212a, so that the mounting surface 212a has four disposing areas 212b relative to the frame 230, and the two lower disposing areas 212b are closer to the edge of the base 210.

As shown in Fig. 5, in the present embodiment, the contour of the outer edge of the frame 230 that is retracted relative to the mounting surface 212a is substantially octagonal, but the disclosure is not limited thereto. In practical applications, the contour of the outer edge of the frame 230 may be circular.

As shown in Fig. 5, in the present embodiment, the frame 230 of the optical actuator 200 includes a bottom frame 231 and a plurality of fixing plates 232. The light-transmitting plate 220 is supported on the bottom frame 231. The fixing plates 232 are fixed on the bottom frame 231 and respectively abut against different edges of the light-transmitting plate 220 to tightly fit and fix the light-transmitting plate 220. In detail, as shown in Fig. 5, the number of fixing plates 232 is four. The contour of the outer edge of the light-transmitting plate 220 is substantially octagonal. The fixing plates 232 are located in two opposite corners of the light-transmitting plate 220.

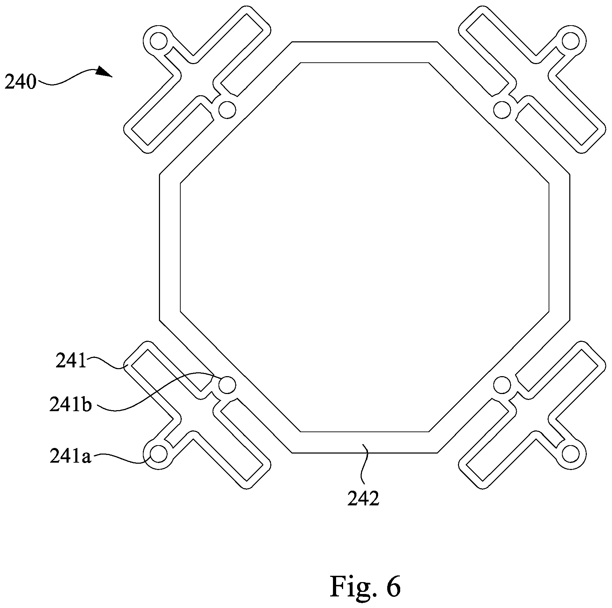

Reference is made to Fig. 6. Fig. 6 is a front view of the suspension bracket 240 in Fig. 4. As shown in Figs. 4 and 6, in the present embodiment, the suspension bracket 240 further includes connection bar 242. The connection bar 242 is in a frame shape and connects the suspension members 241 in series. By connecting the suspension members 241 in series with the connection bar 242, the suspension bracket 240 can be made into a unitary structure, thereby increasing the convenience of installing the suspension bracket 240. Each of the suspension members 241 has a first fixing end 241a and a second fixing end 241b. The first fixing end 241a and the second fixing end 241b are structurally connected to each other and separated by a predetermined distance to maintain structural elasticity. The first fixing end 241a is located at an end of the suspension member 241 away from the connection bar 242. The second fixing end 241b is located at the junction between the suspension member 241 and the connection bar 242. The suspension member 241 is fixed to the base 210 through the first fixing end 241a (e.g., by screwing to the bottom plate 211 of the base 210). The suspension member 241 is fixed to the frame 230 through the second fixing end 241b (e.g., by screwing to the fixing plate 232 of the frame 230). In this way, the suspension bracket 240 can be connected between the base 210 and the frame 230.

In some embodiments, whether the suspension member 241 is located in the disposing area 212b can be determined based on whether the first fixing end 241a is located in the disposing area 212b. As shown in Figs. 4 and 6, the first fixing ends 241a of the four suspension members 241 are respectively located in the four disposing areas 212b, so it can be determined that the suspension members 241 are respectively located in the four disposing areas 212b.

As shown in Fig. 6, in the present embodiment, each of the suspension members 241 includes two ribs. Two ends of each of the ribs are respectively connected to the first fixing end 241a and the second fixing end 241b, and the ribs protrude away from each other in opposite directions between the first fixing end 241a and the second fixing end 241b. Furthermore, the two ribs extend to two sides along the line connecting the first fixing end 241a and the second fixing end 241b and are symmetrical, so that the suspension member 241 forms a symmetrical butterfly wing structure. It should be noted that since the ribs are thinner than the connection bar 242, they are easier to elastically deform. In contrast, since the connection bar 242 is thicker than the ribs, the overall rigidity and stability of the suspension bracket 240 can be increased.

In practical applications, the connection bar 242 can be omitted from the suspension bracket 240. That is, the suspension bracket 240 may only include suspension members 241 that are separated from each other.

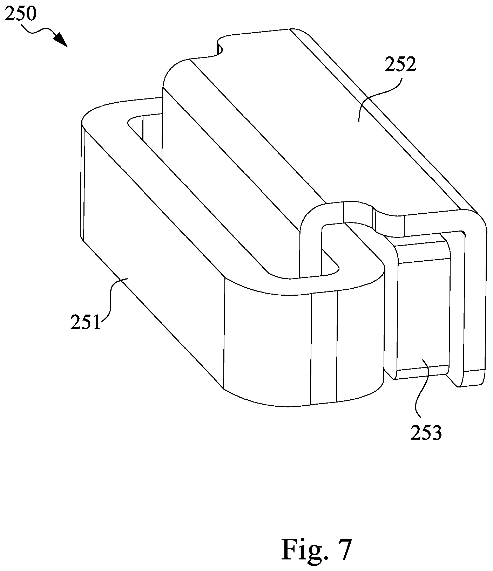

Reference is made to Fig. 7. Fig. 7 is a perspective view of the actuation member 250 in Fig. 2. As shown in Figs. 2 and 7, in the present embodiment, the actuation member 250 includes a coil 251, a magnetic conductive member 252, and a magnet 253. The coil 251 is fixed to the base 210 and electrically connected to the circuit board 212. The wire of the coil 251 is wound substantially parallel to the mounting surface 212a. The magnetic conductive member 252 is fixed to the frame 230 and partially penetrates into the surrounding space of the coil 251 (e.g., along the normal direction N shown in Fig. 3). The magnet 253 is fixed to the magnetic conductive member 252, and the magnetic force of the magnet 253 can be transmitted to the magnetic conductive member 252. According to the left-hand rule, when the left hand is placed in a magnetic field and the magnetic field lines penetrate vertically into the palm of the hand, the four fingers indicate the direction of positive charge movement, and the direction pointed by the thumb vertical to the four fingers is the direction of the Lorentz force. It can be seen from this that by flowing currents in different directions to the coil 251, the Lorentz force can be exerted on the magnetic conductive member 252 to reciprocate along the normal direction N. In this way, the actuation members 250 can drive the frame 230 to reciprocate along the normal direction N relative to the mounting surface 212a.

As shown in Fig. 2, in the present embodiment, two of the actuation members 250 (i.e., the upper actuation member 250 and the lower actuation member 250 in Fig. 2) are arranged along a first diagonal axis DA1. Other two of the actuation members 250 (i.e., the left actuation member 250 and the right actuation member 250 in Fig. 2) are arranged along a second diagonal axis DA2. The first diagonal axis DA1 and the second diagonal axis DA2 are perpendicular to each other. Furthermore, the disposing areas 212b, the suspension members 241 with the first fixing ends 241a and the second fixing ends 241b thereof, and the actuation members 250 are arranged in the first diagonal axis DA1 or the second diagonal axis DA2. The first diagonal axis DA1 extends through the upper and lower disposing areas 212b in Fig. 2. The second diagonal axis DA2 extends through the left and right disposing areas 212b in Fig. 2. These actuation members 250 can actuate sequentially in time sequence. When these actuation members 250 actuate sequentially, the optical axis of the light-transmitting plate 220 can be deflected toward different directions respectively. In this way, the image beam passing through the light-transmitting plate 220 can produce a pixel shift effect, and the image resolution can be improved after signal synchronization. For example, the original resolution of 1920*1080 can be increased to 3840*2160, but the present disclosure is not limited thereto.

As shown in Fig. 2, in the present embodiment, the light valve module 130 has a length axis AL and a width axis AW. The length axis AL and the width axis AW are respectively parallel to the first diagonal axis DA1 and the second diagonal axis DA2. With the configurations, the image beam with the light valve module 130 in the ON state can effectively pass through the light-transmitting plate 220, and the image beam can produce a predetermined pixel shift effect.

According to the foregoing recitations of the embodiments of the disclosure, it can be seen that in the optical actuator and the imaging device of the present disclosure, by concentrating the suspension members and the actuation members on a plurality of disposing areas of the mounting surface of the base, the area of the mounting surface can be reduced, thereby effectively reducing the volume occupied by the optical actuator in the imaging device. In this way, the applicability of projection lenses with various focal lengths in the imaging device of the present disclosure can be effectively increased.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. An optical actuator (200), comprising:
a base (210) having a mounting surface (212a);
a light-transmitting plate (220) located above the mounting surface (212a);
a frame (230) framing an outer edge of the light-transmitting plate (220), wherein the frame (230) retreats inwardly relative to the mounting surface (212a), so that the mounting surface (212a) has a plurality of disposing areas (212b) relative to the frame (230);
a plurality of suspension members (241) respectively located on the disposing areas (212b) and connected between the base (210) and the frame (230); and
a plurality of actuation members (250) respectively located on the disposing areas (212b) and configured to drive the frame (230) to reciprocate relative to the mounting surface (212a).

2. The optical actuator (200) of claim 1, wherein one of the suspension members (241) and one of the actuation members (250) on one of the disposing areas (212b) are arranged in a normal direction (N) of the mounting surface (212a).

3. The optical actuator (200) of claim 2, wherein the actuation members (250) are configured to drive the frame (230) to reciprocate relative to the mounting surface (212a) along the normal direction (N).

4. The optical actuator (200) of claim 1, wherein the disposing areas (212b) are respectively located at four corners of the base (210).

5. The optical actuator (200) of claim 1, wherein two of the actuation members (250) are arranged along a first diagonal axis (DA1), other two of the actuation members (250) are arranged along a second diagonal axis (DA2), and the first diagonal axis (DA1) and the second diagonal axis (DA2) are perpendicular to each other.

6. An imaging device (100), comprising:
a light valve module (130);
an optical actuator (200) comprising:
a base (210) having a mounting surface (212a);
a light-transmitting plate (220) located above the mounting surface (212a);
a frame (230) framing an outer edge of the light-transmitting plate (220), wherein the frame (230) retreats inwardly relative to the mounting surface (212a), so that the mounting surface (212a) has a plurality of disposing areas (212b) relative to the frame (230);
a plurality of suspension members (241) respectively located on the disposing areas (212b) and connected between the base (210) and the frame (230); and
a plurality of actuation members (250) respectively located on the disposing areas (212b) and configured to drive the frame (230) to reciprocate relative to the mounting surface (212a); and
a plurality of prisms (141, 142) optically coupled between the light valve module (130) and the light-transmitting plate (220).

7. The imaging device (100) of claim 6, wherein one of the suspension members (241) and one of the actuation members (250) on one of the disposing areas (212b) are arranged in a normal direction (N) of the mounting surface (212a).

8. The imaging device (100) of claim 7, wherein the actuation members (250) are configured to drive the frame (230) to reciprocate relative to the mounting surface (212a) along the normal direction (N).

9. The imaging device (100) of claim 6, wherein the disposing areas (212b) are respectively located at four corners of the base (210).

10. The imaging device (100) of claim 6 wherein two of the actuation members (250) are arranged along a first diagonal axis (DA1), other two of the actuation members (250) are arranged along a second diagonal axis (DA2), and the first diagonal axis (DA1) and the second diagonal axis (DA2) are perpendicular to each other.

11. The imaging device (100) of claim 10, wherein the first diagonal axis (DA1) extends through two of the disposing areas (212b), and the second diagonal axis (DA2) extends through other two of the disposing areas (212b).

12. The imaging device (100) of claim 10, wherein the light valve module (130) has a length axis (AL) and a width axis (AW) respectively parallel to the first diagonal axis (DA1) and the second diagonal axis (DA2).

13. The imaging device (100) of claim 12, wherein the base (210) further has a side surface (212c) connected to the mounting surface (212a), the side surface (212c) is connected to two of the disposing areas (212b), the prisms (141, 142) comprise a first prism (141) and a second prism (142), the first prism (141) is located between the light valve module (130) and the light-transmitting plate (220), and the second prism (142) is partially located between the light valve module (130) and the first prism (141) and extends to a side of the side surface (212c) to form a gap (G) with the side surface (212c).

14. The imaging device (100) of claim 10, wherein one of the suspension members (241) has a first fixing end (241a) and a second fixing end (241b), and is fixed to the base (210) and the frame (230) respectively through the first fixing end (241a) and the second fixing end (241b).

15. The imaging device (100) of claim 14, wherein the one of the suspension members (241) comprises two ribs, two ends of each of the ribs are respectively connected to the first fixing end (241a) and the second fixing end (241b), and the ribs protrude away from each other in opposite directions between the first fixing end (241a) and the second fixing end (241b).
